# EUROPEAN PATENT SPECIFICATION

(11) **EP 3 827 190 B1**
(45) Date of publication and mention of the grant of the patent: **07.06.2023**
(21) Application number: 19756433.9
(22) Date of filing: 23.07.2019
(51) Int. Cl.: F16L 1/19, F16L 1/20, B63B 35/03, E21B 19/15

(54) **A MARINE J-LAY PIPELAYING INSTALLATION AND METHOD**
ANLAGE UND VERFAHREN FÜR MARINE J-FÖRMIGE ROHRVERLEGUNG
INSTALLATION ET PROCÉDÉ DE POSE DE CANALISATION MARINE SELON UNE POSE EN J

(30) Priority: 24.07.2018 NL 2021387
(43) Date of publication of application: 02.06.2021
(73) Proprietor: Itrec B.V., 3115 HH Schiedam (NL)
(72) Inventor: VEHMEIJER, Terence Willem August, 3115 HH SCHIEDAM (NL); DONKERS, Jeroen Adrianus Joseph, 3115 HH SCHIEDAM (NL)
(74) Representative: EP&C
(86) International application number: PCT/NL2019/050475
(87) International publication number: WO 2020/022887

(56) References cited:
- EP-A1- 2 667 070
- EP-A1- 3 225 532
- EP-B1- 2 462 369
- WO-A1-2018/002204
- WO-A2-2012/091560
- WO-A2-2012/101233
- US-A1- 2010 111 612
- US-A1- 2011 250 019
- US-A1- 2011 286 801

## Description

The present invention relates to a marine J-lay pipelaying wherein an offshore pipeline is laid on the seabed from a vessel equipped with a marine J-lay pipelaying installation.

In the field vessels equipped with a marine J-lay pipelaying installation are well known. In a generally known embodiment such an installation comprises:
- a tower,
- a travelling head clamp,
- a hoisting device for the travelling head clamp, said hoisting device comprising:
   - one or more hoisting winches,
   - one or more hoisting cables driven by said one or more winches,
   - a crown block being mounted on said tower,
   - a travelling block adapted to be lowered and lifted along the tower between an upper level and a lower level, said travelling block carrying said travelling head clamp, wherein said travelling block is suspended from said crown block via said one or more hoisting cables,
- a hang off device, preferably a hang off clamp, adapted to support a previously launched pipeline,
- a pipe section loader system adapted to advance a pipe section into a position in a firing line that extends in line with a previously launched pipeline supported by the hang off device.

The hang off device is often embodied as a clamp, e.g. a friction clamp and/or a collar clamp. It is also known to embodied the hang off device as a tensioner having track units with endless tracks engaging on the pipeline.

The head clamp is often embodied as a friction clamp, but other designs are also known. For example as a collar clamp, or as a combined friction clamp and collar clamp.

In a common J-lay pipelaying operation performed with an installation having the mentioned components, the hang off device supports a previously launched pipeline and the pipe section loader system advances a pipe section into position in the firing line with the travelling block being at the upper level thereof. Then a lower end of the pipe section is connected, often welded, to an uppermost end of the previously launched pipeline supported by the hang off device. The head clamp is engaged on a top end of the pipe section and the weight of the pipeline is transferred to the head clamp. This allows for the release of the hang off device from the pipeline. The hoisting device is then operated to lower the travelling head clamp and the pipeline suspended therefrom so that the travelling head clamp reaches the lower level. Then the weight of the pipeline is transferred to the hang off device and the head clamp is disengaged from the pipeline. The head clamp is then lifted back up to the upper level thereof, thereby clearing the firing line so that a new pipe section can be brought into the firing line by the pipe section loader system.

An example of a known J-lay pipelay installation is shown in WO2012/091560 or WO2012/101233.

The invention aims to provide an improved J-lay pipelaying installation and method. For example it is envisaged to improve the operational efficiency.

The invention provides for a marine J-lay pipelay installation according to claim 1.

The inventive installation is configured to provide a laterally offset lifting path for at least the travelling head clamp, optionally also for the travelling block, which laterally offset lifting path is laterally offset from the firing line. As indicated above, in the prior art installations the head clamp, and travelling block are hoisted back up along the firing line, so the actual lifting path is the same as the firing line along which the head clamp and travelling block were lowered. The inventive installation comprises a lateral offsetting system that is adapted to effect, with the travelling block at or in proximity of the lower level thereof, a lateral displacement of at least the travelling head clamp, optionally also of the travelling block, and preferably also of the crown block, relative to the tower and away from the firing line such as to clear the firing line to an extent that allows for the pipe section loader system to advance a pipe section into a position in the firing line and that allows to lift the travelling head clamp, and optionally also the travelling block, along the laterally offset lifting path in time overlap with the pipe section being advanced into said position in the firing line and/or the pipe section being connected to said uppermost end of the previously launched pipeline.

The inventive design of the J-lay installation thus allows for enhanced efficiency as activities that can in the prior art only be done sequentially, namely arranging the new pipe section in the firing line can only be done once the lifting of the travelling head clamp has been completed, can now be done in timed overlap, so simultaneous to some degree.

It is noted herein that as J-lay commonly requires a very significant hoisting capacity of the hoisting device, e.g. in view of J-lay in water depths of more than 2000 meters, e.g. of 3000 meters or more, the cable arrangement of the hoisting device requires a reeving with many falls.

The invention allows to avoid waste of time due to a rather slow lifting of the travelling block due to the multiple fall reeving thereof.

Whilst in a practical embodiment the crown block, the travelling block, and the head clamp are all shiftable from the firing line into alignment with the offset lifting path other designs are also possible.

For example, in an embodiment, a system of offsetting cable sheaves is arranged below a stationary mounted crown block, the offsetting cable sheaves being movable to effectively divert the cables to the laterally offset lifting path so that the travelling block and the head clamp are lifted in said lifting path.

In yet another embodiment the crown block is mounted stationary and the travelling block has a U-shaped frame in the horizontal plane, so that the frame is well clear of the firing line and does not need to be moved into a lateral offset position to allow for a new pipe section to be arranged in the firing line. For example two groups of cables extend between the crown block and the travelling block, with a clearance between them so as to leave room for arranging a new pipe section in the firing line. In such embodiment, it may suffice for the head clamp to be movable relative to the travelling block between a position aligned with the firing line and a laterally offset position, cleared from the firing line.

In an embodiment an upper portion of the tower is movable or removable so as to reduce the height of the tower in view of bridge passage, transit stability, etc. For example the upper portion of the tower is foldable relative to the lower portion, or the upper portion is telescopic relative to the lower portion, or a crane (e.g. of the vessel itself) can be used to lift the upper portion off the lower portion of the tower.

The invention also relates to a marine J-lay pipelaying installation for use on a vessel for laying an offshore pipeline on a seabed, the installation comprising:
- a tower,
- a travelling head clamp,
- a hoisting device for the travelling head clamp, said hoisting device comprising:
   - one or more hoisting winches,
   - one or more hoisting cables driven by said one or more winches,
   - a crown block being mounted on said tower,
   - a travelling block adapted to be lowered and lifted along the tower between an upper level and a lower level, said travelling block carrying said travelling head clamp, wherein said travelling block is suspended from said crown block via said one or more hoisting cables,
- a hang off device, preferably a hang off clamp, adapted to support a previously launched pipeline,
- a pipe section loader system adapted to advance a pipe section into a position in a firing line that extends in line with a previously launched pipeline supported by the hang off device,

wherein, in operation, the hang off device supports a previously launched pipeline and the pipe section loader system advances a pipe section into said position in said firing line with the travelling block being at said upper level, and wherein a lower end of said pipe section is connected to an uppermost end of said previously launched pipeline supported by the hang off device, and wherein said head clamp is engaged on a top end of said pipe section, wherein the weight of the pipeline is transferred to the head clamp and the hang off device is released from the pipeline, wherein the hoisting device is operated to lower the travelling head clamp and the pipeline suspended therefrom so that the travelling head clamp reaches the lower level, whereupon the weight of the pipeline is transferred to the hang off device and the head clamp is disengaged from the pipeline,
characterized in that
the crown block is laterally displaceable mounted on the tower and an associated top lateral offsetting device is provided that is adapted to move the crown block relative to the tower between a location in line with the firing line and an offset location in line with a lifting path for at least the travelling head clamp, optionally also the travelling block, which lifting path is laterally offset from the firing line,
wherein furthermore the travelling head clamp and the travelling block are laterally displaceable relative to the tower between a location at or in proximity of the lower level and in line with the firing line and a location in line with the laterally offset lifting path, preferably by an associated lower lateral offsetting device provided between the tower and one or both of the travelling head clamp and the travelling block,
thereby allowing, with the travelling block at or in proximity of the lower level, to clear the firing line to an extent that allows for the pipe section loader system to advance a pipe section into a position in the firing line and that allows to lift the travelling head clamp and the travelling block along the laterally offset lifting path in time overlap with the pipe section being advanced into said position in the firing line and/or being connected to said uppermost end of the previously launched pipeline.

The invention also relates to a vessel provided with said marine J-lay pipelay installation.

The invention also relates to a method according to claim 6.

A further aspect of the invention marine J-lay pipelaying wherein an offshore pipeline is laid on the seabed from a vessel equipped with a marine J-lay pipelaying installation.

For example, WO2012/091560 discloses a marine J-lay pipelaying installation for use on a vessel for laying an offshore pipeline on a seabed, the installation comprising:
- a tower,
- a travelling head clamp,
- a hoisting device for the travelling head clamp, said hoisting device comprising:
   - one or more hoisting winches,
   - one or more hoisting cables driven by said one or more winches,
   - a crown block being mounted on said tower,
   - a travelling block adapted to be lowered and lifted along the tower over a full vertical stroke between an uppermost level and a lowermost level, said travelling block carrying said travelling head clamp, wherein said travelling block is suspended from said crown block via said one or more hoisting cables,
- a hang off device, preferably a hang off clamp, adapted to support a previously launched pipeline, said hang off device being arranged at or in proximity of the lower level,
- a pipe section loader system adapted to advance a pipe section into a position in a firing line that extends in line with a previously launched pipeline supported by the hang off device,

wherein the installation is provided with a lower workstation that is arranged in proximity of the lowermost level, e.g. on a hull of the vessel or on a lower portion of the tower,
wherein the tower is provided, above the lower workstation, with a lower horizontal ELUT rails adapted to support thereon an external line-up tool (ELUT),
   - an external line-up tool (ELUT) that is selectively mountable on the lower horizontal ELUT rails.

The further aspect of the invention aims to provide a marine J-lay pipelaying installation with enhanced versatility and/or enhanced efficiency.

In the invention installation there is an upper workstation that is mounted on the tower halfway between the uppermost level and the lowermost level, said upper workstation being mobile mounted on the tower between an operative position and a retracted position,
and there is a lower workstation that is arranged in proximity of the lowermost level, e.g. on a hull of the vessel or on a lower portion of the tower,
the tower is provided, above the lower workstation, with a lower horizontal ELUT rails adapted to support thereon an external line-up tool (ELUT),
the tower is provided, above the upper workstation, with an upper horizontal ELUT rails adapted to support thereon an external line-up tool (ELUT).
the external line-up tool (ELUT) is embodied or configured to be selectively mountable on each one of the lower horizontal ELUT rails and the upper horizontal ELUT rails.

This, for example, is advantageous in an installation and method according to the further aspect of the invention. It will be appreciated that the measures according to the further aspect of the invention can also be readily integrated in an installation according to claim 1 and method according to claim 6.

In an embodiment a crane is used to move the ELUT between the upper and lower horizontal ELUT rails.

In embodiments of any aspect of the invention the boom loader is provided with an accessory handling device distinct from the pipe section grippers, at a different position than the grippers, such that the loader device can be used selectively for transfer of one or more pipe sections and for transfer of an accessory to the tower.

In an embodiment the accessory handling device comprise accessory handling rails mounted on the boom loader, wherein the tower is provided with horizontally extending accessory handling tower rails, wherein the accessory handling rails on the boom loader are aligned with the accessory handling tower rails in the raised position of the boom loader, such that an accessory is transferable between the accessory handling device on the loader boom and the tower and is positionable in the firing line.

In an embodiment the accessory handling device comprises an accessory handling frame that is configured to retain an accessory, which accessory handling frame is embodied to move over the accessory handling rails attached to the boom loader and over the accessory handling tower rails.

The invention, and aspects thereof, will be described below with reference to the drawings. In the drawings:
- Fig. 1 shows an example of a J-lay installation according to the invention,
- Fig. 2 the installation of figure 1 from a different angle,
- Fig. 3 shows the top portion of the installation of figure 1 with the crown block, travelling block and head clamp arranged in the firing line,
- Fig. 4 shows the top portion of the installation of figure 1 with the crown block, travelling block and head clamp arranged in a laterally offset position,
- Fig. 5 shows a top view onto the installation of figure 1 in reel lay operational state with the upper station pivoted into a non-operative position,
- Fig. 6 shows the J-lay installation of figure 5 in side view,
- Figs. 7a,b,c show the installation of figure 1 with the crown block, travelling block and head clamp arranged in a laterally offset position,
- Figures 8-9 illustrate the half vertical stroke mode operation of the J-lay installation of figure 1.

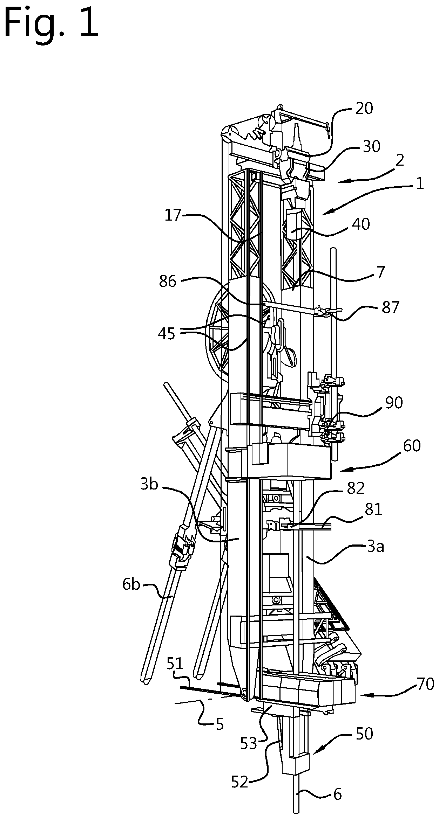

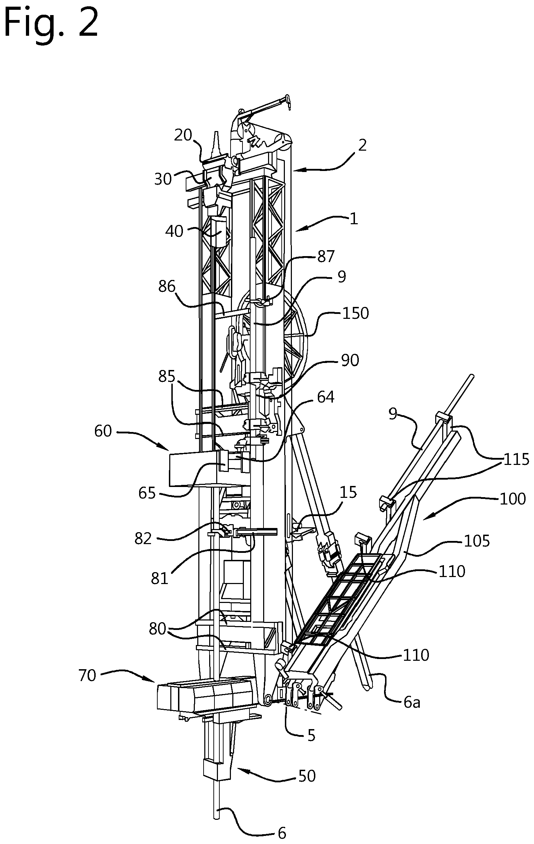

With reference to figures 1 - 9 the invention and aspects thereof will be elucidated.

The figures only depict the marine J-lay pipelaying installation and not the vessel on which the installation is or can be mounted for laying of an offshore pipeline on a seabed.

The installation as depicted can, for example, be mounted on a vessel as shown in WO2012091560. The vessel could be a monohull vessel, but could also be of another design, e.g. like a semi-submersible, catamaran vessel, etc.).

The installation comprise a tower 1. In this example it is envisaged that the tower 1 is configured for full stroke handling of "hex joints", so six joints interconnected with a length of approximately 72 meters.

The tower 1 has a top end that is provided with a crown block support structure 2.

The tower is configured to be pivotally mounted to the hull of the vessel, here about a horizontal pivot axis 5 at the lower end of the tower 1.

An adjuster device 6a, b is provided to adjust the angle of the tower 1 relative to the hull. The angle is adjustable over a range that includes at least the vertical orientation of the tower 1. In embodiments, the tower 1 can be brought into an overboarding angular orientation, e.g. as described in WO2009/134116.

The tower 1 has a structure with two main legs 3a, b, extending between the lower end and the upper end of the tower 1, as well as cross tower members that rigidly interconnected the main legs.

In an embodiment, as shown here, an upper portion of the main legs 3a, b is embodied as a lattice structure, whereas the lower portion is embodied as box girder.

In an embodiment an upper portion of the tower 1 is movable or removable so as to reduce the height of the tower 1 in view of bridge passage, transit stability, etc. For example the upper portion of the tower is foldable relative to the lower portion, or the upper portion is telescopic relative to the lower portion, or a crane (e.g. of the vessel itself) can be used to lift the upper portion off the lower portion of the tower.

The installation further comprises a travelling head clamp 40 and a hoisting device for the travelling head clamp 40.

The hoisting device comprises:
- one or more hoisting winches 15
- one or more hoisting cables 16 driven by said one or more winches 15,
- a crown block 20 being mounted on the tower,
- a travelling block 30 adapted to be lowered and lifted along the tower 1 between an upper level and a lower level. The block 30 is suspended from the crown block 20 via the one or more hoisting cables 16.

The travelling block 30 carries the travelling head clamp 40, e.g. the head clamp 40 being suspended from the block 30. As discussed the head clamp 40 can be a friction clamp and/or a collar clamp, for example.

The installation further comprises a hang off device 50, here a hang off clamp 50, that is adapted to support a previously launched pipeline. It is illustrated that the clamp 50 is mounted on the hull of the vessel, e.g. movable over hang off clamp rails 51 between an operative position and a retracted position. It is illustrated that the clamp 50 is pivotal relative to the vertical, e.g. a pivoting actuator 52 being mounted between a hang off clamp carrier 53 and the hang off clamp 50.

The installation comprises an upper workstation 60 that is mounted on the tower 1 halfway between the uppermost level and the lowermost level of the full vertical stroke of the head clamp 40.

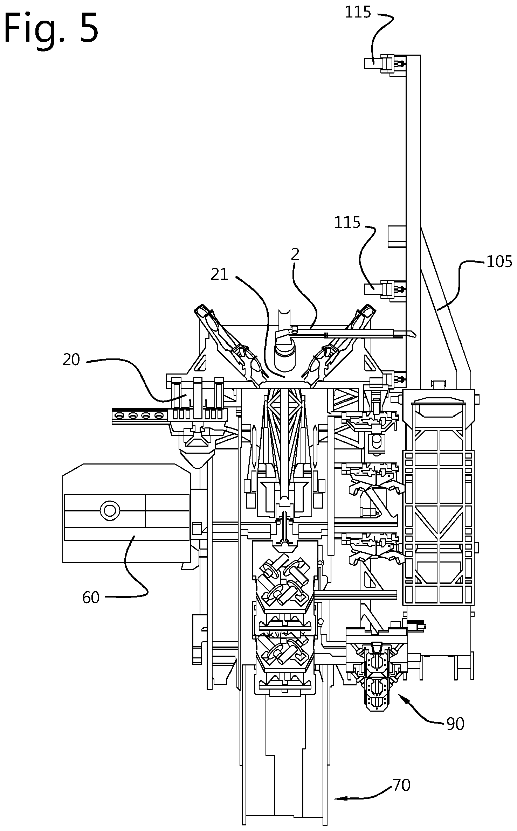

It is illustrated, e.g. in figure 1,5 that the upper workstation is mobile mounted on the tower 1 between an operative position and a retracted position (figure 5).

The installation is provided with a lower workstation 70 that is arranged in proximity of the lowermost level of the head clamp 40, here as preferred on the hull of the vessel, here between the two main legs of the tower. In an alternative design the lower workstation may be arranged on a lower portion of the tower.

The tower 1 is provided, above the lower workstation 70, with a lower horizontal ELUT rails, here a pair of parallel rails 80, that is adapted to support thereon an external line-up tool (ELUT) 90.

The tower 1 is provided, above the upper workstation 60, with an upper horizontal ELUT rails, here a pair of parallel rails 85, adapted to support thereon the external line-up tool (ELUT) 90.

The figures show a situation during a J-lay pipelaying operation wherein a previously launched pipeline 6 is supported by the hang off device 50.

It is illustrated that a firing line 7 extends in line with the previously launched pipeline 6 that is supported by the hang off device 50.

The installation comprises a pipe section loader system 100 that is configured to advance a pipe section, here possibly two pipe sections 8, 9 simultaneously, into a position in the firing line 7.

The pipe section loader system here, as preferred, comprises a pivotal loader boom 105 that is provided with a lower set of pipe section grippers 110 and an upper set of pipe section grippers 115.

The lower set of pipe section grippers 110 is adapted to grip pipe section 8 and the upper set of pipe section grippers 115 is adapted to grip a pipe section 9. As preferred these two pipe sections 8, 9 each a length corresponding to half the full vertical stroke between the uppermost level and the lowermost level of the head clamp 40. In this example each pipe section 8, 9 is a triple joint pipe section. As preferred the triple joints 8, 9 have been made on shore, so welded from single joints, with the two welds being inspected and coated on shore.

The loader boom 105 is pivotal between a substantially horizontal loading position, wherein the one or two pipe sections 8, 9 are loaded onto the boom 105, and a raised or erected position, here generally at the same angle as the tower 1 and extending along a vertical side of the tower 1.

In an embodiment, as here, it is envisaged that a set of pipe grippers 110, 115 is configured and operated to transfer a pipe section to the ELUT 90, so as to grip the respective pipe section by means of the ELUT. To this end the ELUT 90 is movable, e.g. skiddable, over the respective rails 80, 85 between a transfer position at a vertical side of the tower where the boom loader will be in raised orientation thereof and an operative position aligned with the firing line 7.

In addition to the rail 80 for the ELUT 90, the tower is also provided with a horizontal rail 81 for an additional lower pipe section clamp or centralizer 82 that is provided a retain a lower pipe section 8 at a location above the rail 80 and below the upper workstation.

In addition to the rail 85 for the ELUT 90, the tower is also provided with a horizontal rail 86 for an additional upper pipe section clamp or centralizer 87 that is provided a retain an upper pipe section 9 at a location above the rails 85.

For example the clamps 82, 87 are each skiddable over the respective rail 81, 86 in sync with a motion of the ELUT 90 so that a pipe section, or two pipe section joined together, is translatable (in vertical orientation) between a transfer position adjacent a vertical side of the tower 1 and a position aligned with the firing line 7.

The upper workstation 60 is provided with a side wall, floor and roof. The workstation, at least at one lateral side thereof, has a lateral access opening 64, here closable by one or more doors 65. The access opening 64 can be configured to allow for entry of the lower portion of the upper pipe section 9, as depicted here. In another embodiment the access opening extends over the height of the upper workstation 60 to allow for lateral introduction of an upper portion of the lower pipe section 8 and of a lower portion of the upper pipe section 9 into the upper workstation and into the firing line 7, for example thee lower and upper pipe sections 8,9 having been joined to one another ahead of being introduced laterally into the upper workstation 60. For example herein this join is being inspected and/or coated in the upper workstation 60.

The upper workstation 60 here is pivotally mounted onto one leg of the tower 1, so as to be pivotal about a vertical pivot between an operative position, allowing for work to be done on pipe sections in the firing line, e.g. the join thereof, e.g. welding and/or weld inspection and/or coating, and a retracted, or non-operative position.

The lower workstation 70 is provided with a side wall, floor, and roof. The workstation, at least at one lateral side thereof, has a lateral access opening 74, here closable by one or more doors 75. The access opening 74 can be configured to allow for entry of the lower portion of the lower pipe section 8, or of the already joined lower and upper pipe sections 8,9.

The lower workstation also comprises a front access opening 76, here with door 76, to allow for the movement of the lower workstation 70 in an axial direction, e.g. over hull mounted rails, between an operative position as shown and a retracted position wherein the workstation 70 is clear of the path from the crown block downward.

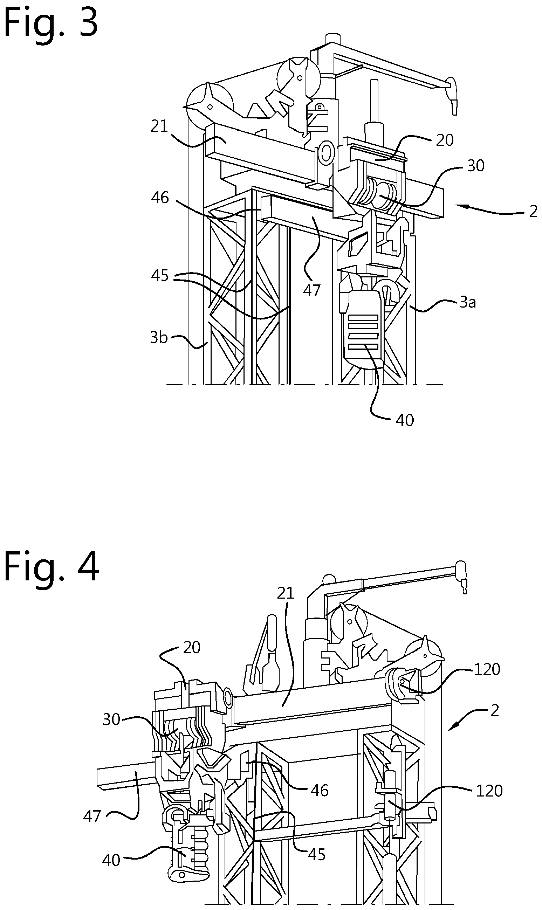

A shown illustrated, e.g. in figures 3, 4 the crown block 20 is laterally displaceable mounted on the crown block support of the tower 1. Here a horizontal rail structure 21 is provided at the top end of the tower 1 over which the crown block 20 is movable, e.g. skiddable. An associated top lateral offsetting device, not shown, e.g. a skid mechanism, is provided that is adapted to move the crown block 20 relative to the tower 1 between a location in line with the firing line 7 (see figure 3) and an offset location in line with a lateral offset lifting path 17 for the travelling block 30 and the travelling head clamp 40. This lifting path 17 is laterally offset from the firing line 7, as preferred in the direction in which the new pipe section(s) 8,9 is/are advanced into the firing line 7 by the loader system.

As shown here, and as preferred, the lateral direction of offset of the path 17 relative to the firing line and to the tower 1 corresponds to a direction in a plane parallel to the respective main face of the tower 1, so not a direction passing between the legs 6a, b of the tower. As preferred, and as shown here, the lifting path 17 is generally along a front face of one of the legs of the tower.

As shown here, and as preferred, also the travelling block 30 and the head clamp 40 are actively laterally displaceable relative to the tower 1 between a location at or in proximity of the lower level and in line with the firing line 7 and a location in line with the laterally offset lifting path 17. As preferred this is done by an associated lower lateral offsetting device provided between the tower 1 and one or both of the travelling head clamp and the travelling block.

The one or more cables 16 are appropriately reeved between the crown block 20 and the one or more corresponding winches 15, preferably mounted on the tower 1, so as to be operable in either of the firing line position and the laterally offset position of the crown block.

In an embodiment the travelling block 30 is connected to terminal ends of the cables 16, e.g. in a so-called single layer winch arrangement. More commonly the block 30 carries cable sheaves around which the one or more cables 16 pass.

As illustrated, and as preferred, the tower 1 is provided with at least one vertical guide rails 45 over which a guide device 46 travels, which guide device 46 engages on one or both of the travelling head clamp and the travelling block. The guide device 46, preferably, provides holding positions for one or both of the travelling head clamp and the travelling block, a first holding position corresponding to the head clamp 40 being aligned with the firing line and the second holding position corresponding to the travelling head clamp and the travelling block being aligned with the laterally offset lifting path 17. Thereby any undue sway motion of these heavy components is avoided, e.g. during lowering and/or lifting.

For example the guide device 46 comprises a base configured to travel over one or more vertical rails 45 and a horizontal arm 47 that is horizontally shiftable relative to the base, the arm 47 engaging on one or both of the travelling head clamp and the travelling block.

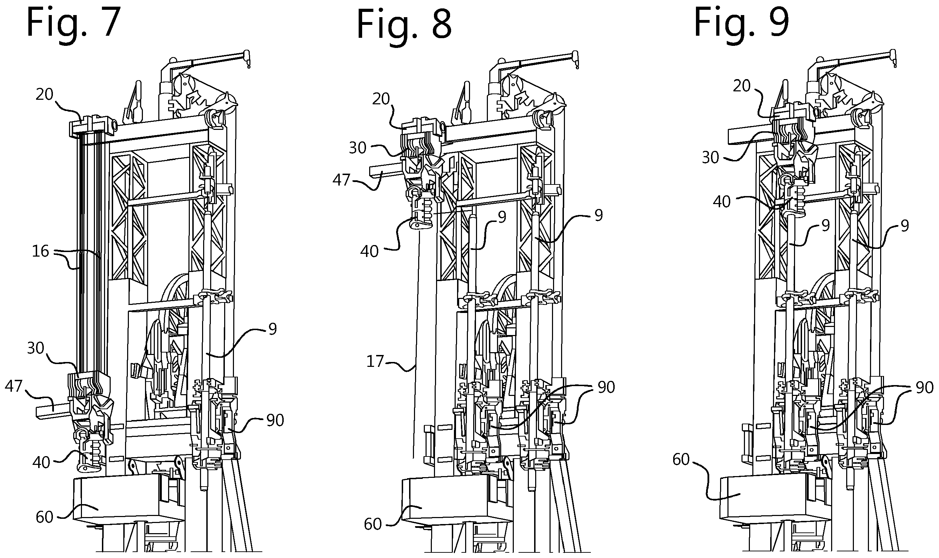

The figures 7, 8, and 9 illustrate a half vertical stroke mode J-lay operation wherein use is made of the illustrated installation.

Herein a single pipe section 9 is loaded onto the loader boom and supported by the upper set of pipe grippers 115. As discussed the single pipe section 9 has a length corresponding to the vertical stroke of the travelling block between the uppermost level and the upper workstation 60, here a triple of 36 meter.

The loader boom raises this single pipe section 9 into the transfer position, generally along a side of the tower 1. In figure 7 it is shown that the pipe section 9 has been transferred onto the ELUT 90 that is mounted on the rails 85 and also the upper clamp 87 is engaged with the pipe section 9.

It is also shown in figure 7 that the uppermost end of the previously launched pipeline 6 is arranged in the upper workstation 60, the pipeline weight being held by the hang off clamp 50 (here a friction clamp).

It is also shown in figure 7 that the crown block 20, travelling block 30, and head clamp 40, still in or in proximity of the lower level thereof for the half vertical stroke mode operation, as well as the cables 16 between the crown block 20 and travelling block 30 are in the laterally offset position relative to the firing line 7. As will be appreciated this allows for bringing the pipe section 9 in the firing line 7 whilst the head clamp 40 is still in or in proximity of the lower level thereof as the offset location is sufficiently cleared from the firing line 7. Depending for example, on the design of the head clamp 40 it may be required to lift the head clamp in the firing line first, in order to clear the head clamp from the top of the pipeline, where after the head clamp can be moved laterally towards the offset lifting path. In another embodiment, the head clamps opens such that the clamp does not need to be lifted first, and the head clamp can be moved directly in offset direction towards the lifting path.

In figure 8 it is illustrated that the head clamp 40 has been lifted along the laterally offset lifting path 17 whilst the new upper pipe section 9 has been brought into the firing line 7. The ELUT can be operated to accurately align the section 9 with the uppermost end of the pipeline 6 so that a weld or other join can be made.

Figure 9 illustrates that the crown block, travelling block, and head clamp in its upper level is displaced into alignment with the firing line 7 and with the pipe section 9. This allows for the head clamp to be engaged with the top end of section 9.

In a full vertical stroke mode operation the hang off clamp 50 retains the launched pipeline 6 near its upper end, e.g. just below the uppermost end thereof. The ELUT 90 is placed on the rail 81.

The loader boom 105 simultaneously raises two pipe sections 8, 9 loaded thereon into the transfer position. These two pipe sections, here triple joint pipe sections, have a combined length corresponding to the full vertical stroke of the travelling block 30 and head clamp 40 between the uppermost level and the lowermost level.

Preferably the two pipe sections 8, 9 are pre-joined, ahead of the boom loader 105 being raised, e.g. before the pre-joined sections 8,9 are loaded onto the boom loader.

Herein the upper workstation 60 may be in its operative position, so as to allow both the upper end of lower pipe section 8 as well as the lower end of upper pipe section 9 to enter into the workstation. Here, for example, the pre-made join between sections 8, 9 can be coated.

The assembly of the two pipe sections 8, 9 is connected in the lower workstation 70 to the uppermost end of the previously launched pipeline supported by the hang off clamp 50. In the same station 70, preferably, the join is inspected and coated.

Once the join of lower end of pipe section 8 with in the lower station is made, the head clamp 40 is engaged with the upper end of the pipe section 9. Then the step of transfer of the weight of the launched pipeline onto the head clamp 40 is performed, allowing for the release or disengagement of the hang off clamp 50 from the pipeline. Then the head clamp 40 with the suspended pipeline 6 is lowered until the head clamp 40 reaches its lowermost level, e.g. over the height of six joints, so 72 meters. Then the hang off clamp 50 is reapplied and the weight of the pipeline is transferred back onto the clamp 50 allowing for the release of the head clamp 40.

As explained already the inventive installation now allows for the lateral offsetting of the disengaged head clamp, here along with the travelling block and the crown block, so that the lifting of the head clamp 40 is performed along the laterally offset lifting path. As discussed this allows for the lifting of the clamp 40 to be done whilst at the same moment one or more new pipe sections 8,9 are advanced into the firing line 7.

In another practical method it is envisaged that the loader 105 only supplies a single, upper, pipe section 9 to the tower, as discussed above, with merely the weld being made in the upper workstation 60, preferably the weld also being inspected there. Then the hoisting device is operated to lower the pipeline over half the vertical stroke so that this weld becomes arranged in the lower workstation. In said lower workstation the weld is coated. The top end of the tower may, as here, also support an internal tool, e.g. an internal line-up tool or ILUT 120, that is configured to be lowered into the pipe section via the top end thereof. It is envisaged that the internal tool or ILUT 120 may be movable laterally, e.g. over the same rail as the laterally movable crown block, between a non-operative position and a position aligned with the firing line as to allow for lowering the tool into the pipe section.

As illustrated the loader boom 105 may be equipped with an accessory handling device 140 of the type discussed in WO2012091560. For example the boom loader is provided with accessory rails that align with one or more tower rails on the tower, e.g. the same as the rails on which the ELUT can travel, and with an accessory handling frame 141 that is configured to travel from the accessory rails mounted on the loader onto the tower rails. As illustrated and preferred, the accessory handling frame 141 is support on the lower portion of the loader boom, e.g. the frame 141 passing between two pipe grippers of the lower set 110.

As illustrated the same tower 1 used for J-lay may also be equipped with components affording reel lay capability. For example, as here, the tower 1 may be equipped with an aligner wheel 150, a straightener assembly 160, and one or more pipeline tensioners 170, 180 that have multiple tracks adapted to engage on the pipeline. An example of such a dual capability installation is the installation on the pipelay vessel Aegir of Heerema.

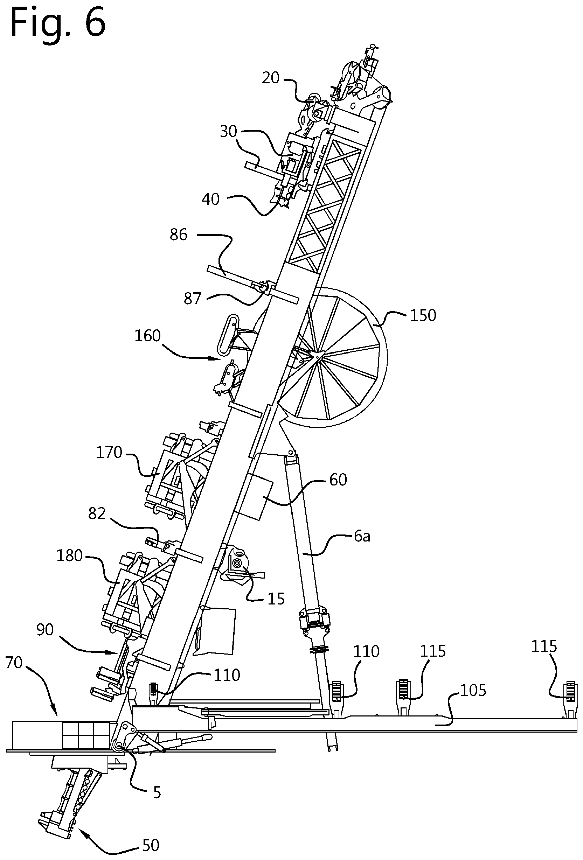

The installation in reel lay state is illustrated in figures 5, 6.

The same one or more tensioners 170, 180 may, in an embodiment, also be used in conjunction with J-lay pipelaying, e.g. taking over, acting as, or assisting the hang off clamp 50.

The one or more tensioners 170, 180 may be movable mounted to the tower 1, so as to have a retracted position (as illustrated) wherein the tensioners 170,180 are cleared from the operational positions and the path of the J-lay equipment, and an operative position wherein the tensioners 170, 180 can be aligned on a firing line at the same side of the tower as the J-lay firing line.

In an embodiment one or more tensioners 170, 180 on the tower are movable into alignment with the J-lay firing line, so as to play a role in the J-lay process.

It will be apparent that one or more of the mentioned rails, e.g. rails 81, 86, can be movably mounted on the tower 1 so as to allow for bringing the reel lay equipment into the operative position thereof. For example, as here, said one or more rails 81, 82 can be pivotable.

## Claims

1. A marine J-lay pipelaying installation for use on a vessel for laying an offshore pipeline on a seabed, the installation comprising:
- a tower (1),
- a travelling head clamp (40),
- a hoisting device for the travelling head clamp, said hoisting device comprising:
- one or more hoisting winches (15),
- one or more hoisting cables (16) driven by said one or more winches,
- a crown block (20) being mounted on said tower,
- a travelling block (30) adapted to be lowered and lifted along the tower between an upper level and a lower level, said travelling block carrying said travelling head clamp, wherein said travelling block is suspended from said crown block via said one or more hoisting cables,
- a hang off device (50), preferably a hang off clamp, adapted to support a previously launched pipeline,
- a pipe section loader system (82,87,90,100) adapted to advance a pipe section into a position in a firing line (7) that extends in line with a previously launched pipeline supported by the hang off device,
wherein, in operation, the hang off device (50) supports a previously launched pipeline (6) and the pipe section loader system (100) advances a pipe section into said position in said firing line (7) with the travelling block (30) being at said upper level, and wherein a lower end of said pipe section is connected to an uppermost end of said previously launched pipeline supported by the hang off device, and wherein said head clamp is engaged on a top end of said pipe section, wherein the weight of the pipeline is transferred to the head clamp and the hang off device is released from the pipeline, wherein the hoisting device is operated to lower the travelling head clamp and the pipeline suspended therefrom so that the travelling head clamp reaches the lower level, whereupon the weight of the pipeline is transferred to the hang off device and the head clamp is disengaged from the pipeline,
**characterized in that**
the installation is configured to provide a laterally offset lifting path (17) for at least the travelling head clamp (40), optionally also for the travelling block (30), which laterally offset lifting path is laterally offset from the firing line (7), the installation comprising a lateral offsetting system (21,45,46,47) that is adapted to effect, with the travelling block at or in proximity of the lower level thereof, a lateral displacement of at least the travelling head clamp (40), optionally also of the travelling block (30), and preferably also of the crown block (20), relative to the tower (1) and away from the firing line (7) such as to clear the firing line to an extent that allows for the pipe section loader system (82,87,90,100) to advance a pipe section into a position in the firing line and that allows to lift the travelling head clamp, and optionally also the travelling block, along the laterally offset lifting path (17) in time overlap with the pipe section being advanced into said position in the firing line and/or the pipe section being connected to said uppermost end of the previously launched pipeline.

2. Installation according to claim 1, wherein the crown block (20) is laterally displaceable mounted on the tower and an associated top lateral offsetting device is provided that is adapted to move the crown block relative to the tower between a location in line with the firing line and an offset location in line with a lifting path for at least the travelling head clamp, optionally also the travelling block, which lifting path is laterally offset from the firing line,

3. Installation according to claim 1 or 2, wherein the travelling head clamp (30) and the travelling block (40) are laterally displaceable relative to the tower between a location at or in proximity of the lower level and in line with the firing line and a location in line with the laterally offset lifting path, preferably by an associated lower lateral offsetting device provided between the tower and one or both of the travelling head clamp and the travelling block,

4. Installation according to any of claims 1-3, wherein the lifting path (17) is laterally offset from the firing line in the direction in which the new pipe section(s) is/are advanced into the firing line by the loader system.

5. Installation according to any of claims 1-4, wherein the lateral direction of offset of the path (17) relative to the firing line and to the tower corresponds to a direction in a plane parallel to a respective main face of the tower.

6. A method for marine J-lay pipelaying of an offshore pipeline (6) on a seabed wherein use is made of a marine J-lay pipelaying installation comprising:
- a tower (1),
- a travelling head clamp (40),
- a hoisting device for the travelling head clamp (40), said hoisting device comprising:
- one or more hoisting winches (15),
- one or more hoisting cables (16) driven by said one or more hoisting winches (15),
- a crown block (20) being mounted on said tower (1),
- a travelling block (30) adapted to be lowered and lifted along the tower (1) between an upper level and a lower level, said travelling block (30) carrying said travelling head clamp (40), wherein said travelling block (30) is suspended from said crown block (20) via said one or more hoisting cables (16),
- a hang off device, preferably a hang off clamp (50), adapted to support a previously launched pipeline (6),
- a pipe section (8, 9) loader (105) system adapted to advance a pipe section (8, 9) into a position in a firing line (7) that extends in line with a previously launched pipeline (6) supported by the hang off device, wherein the method comprises:
i) supporting a previously launched pipeline (6) by means of the hang off device,
ii) advancing a pipe section (8, 9) by means of the pipe section (8, 9) loader (105) position into said position in said firing line (7) with the travelling block (30) being at said upper level,
iii) connecting a lower end lower end of said pipe section (8, 9) to an uppermost end of said previously launched pipeline (6) supported by the hang off device,
iv) engaging the head clamp (40) on a top end of said pipe section (8, 9),
v) transferring the weight of the pipeline (6) to the head clamp (40) and releasing the hang off device from the pipeline (6),
vi) operating the hoisting device to lower the travelling head clamp (40) and the pipeline (6) suspended therefrom so that the travelling head clamp (40) reaches the lower level,
vii) transferring the weight of the pipeline (6) to the hang off device and disengaging the head clamp (40) from the pipeline (6),
**characterized in that** the installation is configured to provide a laterally offset lifting path (17) for the travelling head clamp (40), optionally also for the travelling block (30), that is laterally offset from the firing line (7), the installation comprising a lateral offsetting system that is adapted to effect, with the travelling block (30) at or in proximity of the lower level thereof, a lateral displacement of at least the travelling head clamp (40), optionally also of the travelling block (30), and preferably also of the crown block (20), relative to the tower (1) and away from the firing line (7) such as to clear the firing line (7) to an extent that allows for the pipe section (8, 9) loader (105) system to advance a pipe section (8, 9) into a position in the firing line (7), and wherein the method further comprises:
viii) after the head clamp (40) has been disengaged from the pipeline (6), operating the lateral offsetting system to effect, with the travelling block (30) at or in proximity of the lower level thereof, a lateral displacement of at least the travelling head clamp (40), optionally also of the travelling block (30), preferably also of the crown block (20), away from the firing line (7) so as to move at least the travelling head clamp (40) towards the laterally offset lifting path (17),
ix) lifting the travelling block (30) and the travelling head clamp (40) carried thereby along the laterally offset lifting path (17) in time overlap with the pipe section (8, 9) being advanced into said position in the firing line (7) and/or the pipe section (8, 9) being connected to said uppermost end of the previously launched pipeline (6).

7. A marine J-lay pipelaying installation for use on a vessel for laying an offshore pipeline (6) on a seabed, the installation comprising:
- a tower (1),
- a travelling head clamp (40),
- a hoisting device for the travelling head clamp (40), said hoisting device comprising:
- one or more hoisting winches (15),
- one or more hoisting cables (16) driven by said one or more winches (15),
- a crown block (20) being mounted on said tower (1),
- a travelling block (30) adapted to be lowered and lifted along the tower (1) between an upper level and a lower level, said travelling block (30) carrying said travelling head clamp (40), wherein said travelling block (30) is suspended from said crown block (20) via said one or more hoisting cables (16),
- a hang off device, preferably a hang off clamp (50), adapted to support a previously launched pipeline (6),
- a pipe section (8, 9) loader (105) system adapted to advance a pipe section (8, 9) into a position in a firing line (7) that extends in line with a previously launched pipeline (6) supported by the hang off device,
wherein, in operation, the hang off device supports a previously launched pipeline (6) and the pipe section (8, 9) loader (105) system advances a pipe section (8, 9) into said position in said firing line (7) with the travelling block (30) being at said upper level, and wherein a lower end of said pipe section (8, 9) is connected to an uppermost end of said previously launched pipeline (6) supported by the hang off device, and wherein said head clamp (40) is engaged on a top end of said pipe section (8, 9), wherein the weight of the pipeline (6) is transferred to the head clamp (40) and the hang off device is released from the pipeline (6), wherein the hoisting device is operated to lower the travelling head clamp (40) and the pipeline (6) suspended therefrom so that the travelling head clamp (40) reaches the lower level, whereupon the weight of the pipeline (6) is transferred to the hang off device and the head clamp (40) is disengaged from the pipeline (6),
**characterized in that**
the crown block (20) is laterally displaceable mounted on the tower (1) and an associated top lateral offsetting device is provided that is adapted to move the crown block (20) relative to the tower (1) between a location in line with the firing line (7) and an offset location in line with a lifting path (17) for at least the travelling head clamp (40), optionally also the travelling block (30), which lifting path (17) is laterally offset from the firing line (7),
wherein furthermore the travelling head clamp (40) and the travelling block (30) are laterally displaceable relative to the tower (1) between a location at or in proximity of the lower level and in line with the firing line (7) and a location in line with the laterally offset lifting path (17), preferably by an associated lower lateral offsetting device provided between the tower (1) and one or both of the travelling head clamp (40) and the travelling block (30),
thereby allowing, with the travelling block (30) at or in proximity of the lower level, to clear the firing line (7) to an extent that allows for the pipe section (8, 9) loader (105) system to advance a pipe section (8, 9) into a position in the firing line (7) and that allows to lift the travelling head clamp (40) and the travelling block (30) along the laterally offset lifting path (17) in time overlap with the pipe section (8, 9) being advanced into said position in the firing line (7) and/ or being connected to said uppermost end of the previously launched pipeline (6).

8. A marine J-lay pipelaying installation comprising:
- a tower (1),
- a travelling head clamp (40),
- a hoisting device for the travelling head clamp (40), said hoisting device comprising:
- one or more hoisting winches (15), - one or more hoisting cables (16) driven by said one or more winches (15),
- a crown block (20) being mounted on said tower (1),
- a travelling block (30) adapted to be lowered and lifted along the tower (1) over a full vertical stroke between an uppermost level and a lowermost level, said travelling block (30) carrying said travelling head clamp (40), wherein said travelling block (30) is suspended from said crown block (20) via said one or more hoisting cables (16),
- a hang off device, preferably a hang off clamp (50), adapted to support a previously launched pipeline (6), said hang off device being arranged at or in proximity of the lower level, wherein the installation is provided with an upper workstation (60) that is mounted on the tower (1) halfway between the uppermost level and the lowermost level, said upper workstation (60) being mobile mounted on the tower (1) between an operative position and a retracted position, wherein the installation is provided with a lower workstation (70) that is arranged in proximity of the lowermost level, e.g. on a hull of the vessel or on a lower portion of the tower (1),
- a pipe section (8, 9) loader (105) system adapted to advance two pipe sections (8) into a position in a firing line (7) that extends in line with a previously launched pipeline (6) supported by the hang off device, a lower pipe section (8) of the two being positioned between the lower workstation (70) and the upper workstation (60) and an upper pipe section (9) of the two being positioned between the head clamp (40) in its uppermost level and the upper workstation (60),
wherein the upper workstation (60) is provided with a side wall, floor, and roof, and with a lateral access opening (64, 74) that extends over the height of the upper workstation (60) to allow for lateral introduction of an upper portion of the lower pipe section (8) and of a lower portion of the upper pipe section (9) into the upper workstation (60) and into the firing line (7),
for example said lower and upper pipe section (9) having been joined to one another ahead of being introduced laterally into the upper workstation (60), e.g. the upper workstation (60) being configure for inspection and/or coating of said join in the upper workstation (60).

9. A marine J-lay pipelaying installation for use on a vessel for laying an offshore pipeline (6) on a seabed, the installation comprising:
- a tower (1),
- a travelling head clamp (40),
- a hoisting device for the travelling head clamp (40), said hoisting device comprising:
- one or more hoisting winches (15),
- one or more hoisting cables (16) driven by said one or more winches (15),
- a crown block (20) being mounted on said tower (1),
- a travelling block (30) adapted to be lowered and lifted along the tower (1) over a full vertical stroke between an uppermost level and a lowermost level, said travelling block (30) carrying said travelling head clamp (40), wherein said travelling block (30) is suspended from said crown block (20) via said one or more hoisting cables (16),
- a hang off device, preferably a hang off clamp (50), adapted to support a previously launched pipeline (6), said hang off device being arranged at or in proximity of the lower level,
- a pipe section (8, 9) loader (105) system adapted to advance a pipe section (8, 9) into a position in a firing line (7) that extends in line with a previously launched pipeline (6) supported by the hang off device, wherein the installation is provided with an upper workstation (60) that is mounted on the tower (1) halfway between the uppermost level and the lowermost level, said upper workstation (60) being mobile mounted on the tower (1) between an operative position and a retracted position, wherein the installation is provided with a lower workstation (70) that is arranged in proximity of the lowermost level, e.g. on a hull of the vessel or on a lower portion of the tower (1),
wherein the tower (1) is provided, above the lower workstation (70), with a lower horizontal ELUT (90) rails (80, 81, 85) adapted to support thereon an external line-up tool (ELUT) (90),
and wherein the tower (1) is provided, above the upper workstation (60), with an upper horizontal ELUT (90) rails (80, 81, 85) adapted to support thereon an external line-up tool (ELUT) (90),
- an external line-up tool (ELUT) (90) that is selectively mountable on each one of the lower horizontal ELUT (90) rails (80, 81, 85) and the upper horizontal ELUT (90) rails (80, 81, 85).

## Patentansprüche

1. Maritime J-Lay-Rohrverlegungsanlage zur Verwendung auf einem Schiff zum Verlegen einer Offshore-Pipeline auf einem Meeresboden, wobei die Anlage umfasst:
- einen Turm (1),
- eine bewegliche Kopfklemme (40),
- eine Hebeeinrichtung für die bewegliche Kopfklemme, wobei die Hebeeinrichtung umfasst:
- eine oder mehrere Hubwinden (15),
- ein oder mehrere Hebeseile (16), die von der einen oder den mehreren Winden angetrieben werden,
- einen Kronenblock (20), der an dem Turm montiert ist,
- einen Fahrblock (30), der geeignet ist, entlang des Turms zwischen einem oberen Niveau und einem unteren Niveau abgesenkt und angehoben zu werden, wobei der Fahrblock die bewegliche Kopfklemme trägt, wobei der Fahrblock an dem Kronenblock über das eine oder die mehreren Hebeseile aufgehängt ist,
- eine Abhängeeinrichtung (50), vorzugsweise eine Abhängeklemme, die geeignet ist, eine zuvor eingebrachte Rohrleitung zu halten,
- ein Rohrabschnitt-Ladesystem (82, 87, 90, 100), das ausgelegt ist, um einen Rohrabschnitt in eine Position in einer Firing Line (7) zu befördern, die sich ausgerichtet mit einer zuvor eingebrachten Rohrleitung erstreckt, die von der Abhängeeinrichtung gehalten wird,
wobei im Betrieb die Abhängeeinrichtung (50) eine zuvor eingebrachte Rohrleitung (6) hält und das Rohrabschnitt-Ladesystem (100) einen Rohrabschnitt in die Position in der Firing Line (7) befördert, wobei sich der Fahrblock (30) auf dem oberen Niveau befindet, und wobei ein unteres Ende des Rohrabschnitts mit einem obersten Ende der zuvor eingebrachten Rohrleitung verbunden wird, die von der Abhängeeinrichtung gehalten wird, und wobei sich die Kopfklemme mit einem oberen Ende des Rohrabschnitts in Eingriff befindet, wobei das Gewicht der Rohrleitung auf die Kopfklemme übertragen wird und die Abhängeeinrichtung von der Rohrleitung gelöst wird, wobei die Hebeeinrichtung betätigt wird, um die bewegliche Kopfklemme und die daran aufgehängte Rohrleitung abzusenken, so dass die bewegliche Kopfklemme das untere Niveau erreicht, woraufhin das Gewicht der Rohrleitung auf die Abhängeeinrichtung übertragen wird und die Kopfklemme außer Eingriff mit der Rohrleitung kommt,
**dadurch gekennzeichnet,**
**dass** die Anlage ausgestaltet ist, um einen seitlich versetzten Hubweg (17) für zumindest die bewegliche Kopfklemme (40), optional auch für den Fahrblock (30), bereitzustellen, wobei der seitlich versetzte Hubweg seitlich von der Firing Line (7) versetzt ist, wobei die Anlage ein Seitenversatzsystem (21, 45, 46, 47) umfasst, das ausgestaltet ist, um mit dem Fahrblock auf oder in der Nähe des unteren Niveaus davon ein seitliches Versetzen zumindest der beweglichen Kopfklemme (40), optional auch des Fahrblocks (30) und vorzugsweise auch des Kronenblocks (20), relativ zu dem Turm (1) und weg von der Firing Line (7) zu bewerkstelligen, um die Firing Line in einem Ausmaß freizugeben, das es dem Rohrabschnitt-Ladesystem (82, 87, 90, 100) ermöglicht, einen Rohrabschnitt in eine Position in der Firing Line zu befördern, und das es ermöglicht, die bewegliche Kopfklemme, und optional auch den Fahrblock, entlang des seitlich versetzten Hubweges (17) in zeitlicher Überlappung damit anzuheben, dass der Rohrabschnitt in die Position in der Firing Line befördert wird und/oder der Rohrabschnitt mit dem obersten Ende der zuvor eingebrachten Rohrleitung verbunden wird.

2. Anlage nach Anspruch 1, wobei der Kronenblock (20) seitlich versetzbar an dem Turm montiert ist und eine zugehörige obere Seitenversatzeinrichtung vorhanden ist, die ausgestaltet ist, um den Kronenblock relativ zu dem Turm zwischen einer Position ausgerichtet mit der Firing Line und einer versetzten Position ausgerichtet mit einem Hubweg für zumindest die bewegliche Kopfklemme, optional auch den Fahrblock, zu bewegen, wobei der Hubweg seitlich von der Firing Line versetzt ist.

3. Anlage nach Anspruch 1 oder 2, wobei die bewegliche Kopfklemme (30) und der Fahrblock (40) relativ zu dem Turm zwischen einer Position auf oder in der Nähe des unteren Niveaus und ausgerichtet mit der Firing Line und einer Position ausgerichtet mit dem seitlich versetzten Hubweg seitlich versetzbar sind, vorzugsweise durch eine zugehörige untere Seitenversatzeinrichtung, die zwischen dem Turm und der beweglichen Kopfklemme und/oder dem Fahrblock vorhanden ist.

4. Anlage nach einem der Ansprüche 1 bis 3, wobei der Hubweg (17) in der Richtung, in der der/die neue(n) Rohrabschnitt(e) durch das Ladesystem in die Firing Line befördert wird/werden, seitlich von der Firing Line versetzt ist.

5. Anlage nach einem der Ansprüche 1 bis 4, wobei die seitliche Richtung des Versatzes des Weges (17) relativ zu der Firing Line und zu dem Turm einer Richtung in einer Ebene parallel zu einer jeweiligen Hauptfläche des Turms entspricht.

6. Verfahren zum maritimen J-Lay-Rohrverlegen einer Offshore-Pipeline (6) auf einem Meeresboden, bei dem eine maritime J-Lay-Rohrverlegungsanlage verwendet wird, umfassend:
- einen Turm (1),
- eine bewegliche Kopfklemme (40),
- eine Hebeeinrichtung für die bewegliche Kopfklemme (40), wobei die Hebeeinrichtung umfasst:
- eine oder mehrere Hubwinden (15),
- ein oder mehrere Hebeseile (16), die von der einen oder den mehreren Hubwinden (15) angetrieben werden,
- einen Kronenblock (20), der an dem Turm (1) montiert ist,
- einen Fahrblock (30), der geeignet ist, entlang des Turms (1) zwischen einem oberen Niveau und einem unteren Niveau abgesenkt und angehoben zu werden, wobei der Fahrblock (30) die bewegliche Kopfklemme (40) trägt, wobei der Fahrblock (30) an dem Kronenblock (20) über das eine oder die mehreren Hebeseile (16) aufgehängt ist,
- eine Abhängeeinrichtung, vorzugsweise eine Abhängeklemme (50), die geeignet ist, eine zuvor eingebrachte Rohrleitung (6) zu halten,
- ein Rohrabschnitt- (8, 9) Lade- (105) System, das ausgelegt ist, um einen Rohrabschnitt (8, 9) in eine Position in einer Firing Line (7) zu befördern, die sich ausgerichtet mit einer zuvor eingebrachten Rohrleitung (6) erstreckt, die von der Abhängeeinrichtung gehalten wird, wobei das Verfahren umfasst:
i) Halten einer zuvor eingebrachten Rohrleitung (6) mittels der Abhängeeinrichtung,
ii) Befördern eines Rohrabschnitts (8, 9) mittels des Rohrabschnitt- (8, 9) Lade-(105) Systems in die Position in der Firing Line (7), wobei sich der Fahrblock (30) auf dem oberen Niveau befindet,
iii) Verbinden eines unteren Endes des Rohrabschnitts (8, 9) mit einem obersten Ende der zuvor eingebrachten Rohrleitung (6), die von der Abhängeeinrichtung gehalten wird,
iv) in Eingriff Bringen der Kopfklemme (40) an einem oberen Ende des Rohrabschnitts (8, 9),
v) Übertragen des Gewichts der Rohrleitung (6) auf die Kopfklemme (40) und Lösen der Abhängeeinrichtung von der Rohrleitung (6),
vi) Betätigen der Hebeeinrichtung, um die bewegliche Kopfklemme (40) und die daran hängende Rohrleitung (6) abzusenken, so dass die bewegliche Kopfklemme (40) das untere Niveau erreicht,
vii) Übertragen des Gewichts der Rohrleitung (6) auf die Abhängeeinrichtung und außer Eingriff Bringen der Kopfklemme (40) von der Rohrleitung (6),
**dadurch gekennzeichnet, dass** die Anlage ausgestaltet ist, um einen seitlich versetzten Hubweg (17) für die bewegliche Kopfklemme (40), optional auch für den Fahrblock (30), bereitzustellen, der seitlich von der Firing Line (7) versetzt ist, wobei die Anlage ein Seitenversatzsystem umfasst, das ausgestaltet ist, um mit dem Fahrblock (30) auf oder in der Nähe des unteren Niveaus davon ein seitliches Versetzen zumindest der beweglichen Kopfklemme (40), optional auch des Fahrblocks (30) und vorzugsweise auch des Kronenblocks (20), relativ zu dem Turm (1) und weg von der Firing Line (7) zu bewerkstelligen, um die Firing Line (7) in einem Ausmaß freizugeben, das es dem Rohrabschnitt- (8, 9) Lade- (105) System ermöglicht, einen Rohrabschnitt (8, 9) in eine Position in der Firing Line (7) zu befördern, und wobei das Verfahren darüber hinaus umfasst:
viii) nachdem die Kopfklemme (40) außer Eingriff mit der Rohrleitung (6) gebracht worden ist, Betätigen des Seitenversatzsystems, um mit dem Fahrblock (30) auf oder in der Nähe des unteren Niveaus desselben ein seitliches Versetzen zumindest der beweglichen Kopfklemme (40), optional auch des Fahrblocks (30), vorzugsweise auch des Kronenblocks (20), von der Firing Line (7) weg zu bewirken, um zumindest die bewegliche Kopfklemme (40) in Richtung des seitlich versetzten Hubweges (17) zu bewegen,
ix) Anheben des Fahrblocks (30) und der von ihm getragenen beweglichen Kopfklemme (40) entlang des seitlich versetzten Hubweges (17) in zeitlicher Überlappung damit, dass der Rohrabschnitt (8, 9) in die Position in der Firing Line (7) befördert wird und/oder der Rohrabschnitt (8, 9) mit dem obersten Ende der zuvor eingebrachten Rohrleitung (6) verbunden wird.

7. Maritime J-Lay-Rohrverlegungsanlage zur Verwendung auf einem Schiff zum Verlegen einer Offshore-Pipeline (6) auf einem Meeresboden, wobei die Anlage umfasst:
- einen Turm (1),
- eine bewegliche Kopfklemme (40),
- eine Hebeeinrichtung für die bewegliche Kopfklemme (40), wobei die Hebeeinrichtung umfasst:
- eine oder mehrere Hubwinden (15),
- ein oder mehrere Hebeseile (16), die von der einen oder den mehreren Winden (15) angetrieben werden,
- einen Kronenblock (20), der an dem Turm (1) montiert ist,
- einen Fahrblock (30), der geeignet ist, entlang des Turms (1) zwischen einem oberen Niveau und einem unteren Niveau abgesenkt und angehoben zu werden, wobei der Fahrblock (30) die bewegliche Kopfklemme (40) trägt, wobei der Fahrblock (30) an dem Kronenblock (20) über das eine oder die mehreren Hebeseile (16) aufgehängt ist,
- eine Abhängeeinrichtung, vorzugsweise eine Abhängeklemme (50), die geeignet ist, eine zuvor eingebrachte Rohrleitung (6) zu halten,
- ein Rohrabschnitt- (8, 9) Lade- (105) System, das ausgelegt ist, um einen Rohrabschnitt (8, 9) in eine Position in einer Firing Line (7) zu befördern, die sich ausgerichtet mit einer zuvor eingebrachten Rohrleitung (6) erstreckt, die von der Abhängeeinrichtung gehalten wird,
wobei im Betrieb die Abhängeeinrichtung eine zuvor eingebrachte Rohrleitung (6) hält und das Rohrabschnitt- (8, 9) Lade- (105) System einen Rohrabschnitt (8, 9) in die Position in der Firing Line (7) befördert, wobei sich der Fahrblock (30) auf dem oberen Niveau befindet, und wobei ein unteres Ende des Rohrabschnitts (8, 9) mit einem obersten Ende der zuvor eingebrachten Rohrleitung (6) verbunden wird, die von der Abhängeeinrichtung gehalten wird, und wobei sich die Kopfklemme (40) mit einem oberen Ende des Rohrabschnitts (8, 9) in Eingriff befindet, wobei das Gewicht der Rohrleitung (6) auf die Kopfklemme (40) übertragen wird und die Abhängeeinrichtung von der Rohrleitung (6) gelöst wird, wobei die Hebeeinrichtung betätigt wird, um die bewegliche Kopfklemme (40) und die daran aufgehängte Rohrleitung (6) abzusenken, so dass die bewegliche Kopfklemme (40) das untere Niveau erreicht, woraufhin das Gewicht der Rohrleitung (6) auf die Abhängeeinrichtung übertragen wird und die Kopfklemme (40) außer Eingriff mit der Rohrleitung (6) kommt,
**dadurch gekennzeichnet,**
**dass** der Kronenblock (20) an dem Turm (1) seitlich versetzbar angebracht ist und eine zugehörige obere Seitenversatzeinrichtung vorhanden ist, die ausgestaltet ist, um den Kronenblock (20) relativ zu dem Turm (1) zwischen einer mit der Firing Line (7) ausgerichteten Position und einer versetzten, mit einem Hubweg (17) für zumindest die bewegliche Kopfklemme (40), optional auch den Fahrblock (30), ausgerichteten Position zu bewegen, wobei der Hubweg (17) seitlich von der Firing Line (7) versetzt ist,
wobei darüber hinaus die bewegliche Kopfklemme (40) und der Fahrblock (30) relativ zu dem Turm (1) zwischen einer Position auf oder in der Nähe des unteren Niveaus und ausgerichtet mit der Firing Line (7) und einer Position ausgerichtet mit dem seitlich versetzten Hubweg (17) seitlich versetzbar sind, vorzugsweise durch eine zugehörige untere Seitenversatzeinrichtung, die zwischen dem Turm (1) und der beweglichen Kopfklemme (40) und dem Fahrblock (30) vorhanden ist, wodurch ermöglicht wird, dass der Fahrblock (30) auf oder in der Nähe des unteren Niveaus die Firing Line (7) in einem Ausmaß freigibt, das es dem Rohrabschnitt- (8, 9) Lade- (105) System ermöglicht, einen Rohrabschnitt (8, 9) in eine in eine Position in der Firing Line (7) zu befördern, und das es ermöglicht, die bewegliche Kopfklemme (40) und den Fahrblock (30) entlang des seitlich versetzten Hubweges (17) in zeitlicher Überlappung damit anzuheben, dass der Rohrabschnitt (8, 9) in die Position in der Firing Line (7) befördert wird und/oder mit dem obersten Ende der zuvor eingebrachten Rohrleitung (6) verbunden wird.

8. Maritime J-Lay-Rohrverlegungsanlage, umfassend:
- einen Turm (1),
- eine bewegliche Kopfklemme (40),
- eine Hebeeinrichtung für die bewegliche Kopfklemme (40), wobei die Hebeeinrichtung umfasst:
- eine oder mehrere Hubwinden (15),
- ein oder mehrere Hebeseile (16), die von der einen oder den mehreren Winden (15) angetrieben werden,
- einen Kronenblock (20), der an dem Turm (1) montiert ist,
- einen Fahrblock (30), der geeignet ist, entlang des Turms (1) über einen vollen vertikalen Hub zwischen einem obersten Niveau und einem untersten Niveau abgesenkt und angehoben zu werden, wobei der Fahrblock (30) die bewegliche Kopfklemme (40) trägt, wobei der Fahrblock (30) an dem Kronenblock (20) über das eine oder die mehreren Hebeseile (16) aufgehängt ist,
- eine Abhängeeinrichtung, vorzugsweise eine Abhängeklemme (50), die geeignet ist, eine zuvor eingebrachte Rohrleitung (6) zu halten, wobei die Abhängeeinrichtung auf oder in der Nähe des unteren Niveaus angeordnet ist, wobei die Anlage mit einer oberen Arbeitsstation (60) versehen ist, die an dem Turm (1) auf halbem Weg zwischen dem obersten Niveau und dem untersten Niveau angebracht ist, wobei die obere Arbeitsstation (60) an dem Turm (1) zwischen einer Betriebsposition und einer eingefahrenen Position beweglich montiert ist, wobei die Anlage mit einer unteren Arbeitsstation (70) versehen ist, die in der Nähe des untersten Niveaus, z. B. an einem Rumpf des Schiffes oder an einem unteren Abschnitt des Turms (1), angeordnet ist,
- ein Rohrabschnitt- (8, 9) Lade- (105) System, das ausgelegt ist, um zwei Rohrabschnitte (8) in eine Position in einer Firing Line (7) zu befördern, die sich ausgerichtet mit einer zuvor eingebrachten Rohrleitung (6) erstreckt, die von der Abhängeeinrichtung gehalten wird, wobei ein unterer Rohrabschnitt (8) der beiden zwischen der unteren Arbeitsstation (70) und der oberen Arbeitsstation (60) positioniert ist und ein oberer Rohrabschnitt (9) der beiden zwischen der Kopfklemme (40) in ihrem obersten Niveau und der oberen Arbeitsstation (60) positioniert ist,
wobei die obere Arbeitsstation (60) mit einer Seitenwand, einem Boden und einem Dach und mit einer seitlichen Zugangsöffnung (64, 74) versehen ist, die sich über die Höhe der oberen Arbeitsstation (60) erstreckt, um ein seitliches Einführen eines oberen Abschnitts des unteren Rohrabschnitts (8) und eines unteren Abschnitts des oberen Rohrabschnitts (9) in die obere Arbeitsstation (60) und in die Firing Line (7) zu ermöglichen, wobei beispielsweise der untere und der obere Rohrabschnitt (9) vor dem seitlichen Einführen in die obere Arbeitsstation (60) miteinander verbunden worden sind, wobei z. B. die obere Arbeitsstation (60) für eine Inspektion und/oder Beschichtung der Verbindung in der oberen Arbeitsstation (60) ausgestaltet ist.

9. Maritime J-Lay-Rohrverlegungsanlage zur Verwendung auf einem Schiff zum Verlegen einer Offshore-Rohrleitung (6) auf einem Meeresboden, wobei die Anlage umfasst:
- einen Turm (1),
- eine bewegliche Kopfklemme (40),
- eine Hebeeinrichtung für die bewegliche Kopfklemme (40), wobei die Hebeeinrichtung umfasst:
- eine oder mehrere Hubwinden (15),
- ein oder mehrere Hebeseile (16), die von der einen oder den mehreren Winden (15) angetrieben werden,
- einen Kronenblock (20), der an dem Turm (1) montiert ist,
- einen Fahrblock (30), der geeignet ist, um entlang des Turms (1) über einen vollen vertikalen Hub zwischen einem obersten Niveau und einem untersten Niveau abgesenkt und angehoben zu werden, wobei der Fahrblock (30) die bewegliche Kopfklemme (40) trägt, wobei der Fahrblock (30) an dem Kronenblock (20) über das eine oder die mehreren Hebeseile (16) aufgehängt ist,
- eine Abhängeeinrichtung, vorzugsweise eine Abhängeklemme (50), die geeignet ist, eine zuvor eingebrachte Rohrleitung (6) zu halten, wobei die Abhängeeinrichtung auf oder in der Nähe des unteren Niveaus angeordnet ist,
- ein Rohrabschnitt- (8, 9) Lade- (105) System, das ausgelegt ist, um einen Rohrabschnitt (8, 9) in eine Position in einer Firing Line (7) zu befördern, die sich ausgerichtet mit einer zuvor eingebrachten Rohrleitung (6) erstreckt, die von der Abhängeeinrichtung gehalten wird, wobei die Anlage mit einer oberen Arbeitsstation (60) versehen ist, die an dem Turm (1) auf halbem Weg zwischen dem obersten Niveau und dem untersten Niveau angebracht ist, wobei die obere Arbeitsstation (60) an dem Turm (1) zwischen einer Betriebsposition und einer eingefahrenen Position beweglich montiert ist, wobei die Anlage mit einer unteren Arbeitsstation (70) versehen ist, die in der Nähe des untersten Niveaus, z.B. auf einem Rumpf des Schiffes oder auf einem unteren Abschnitt des Turms (1), angeordnet ist,
wobei der Turm (1) oberhalb der unteren Arbeitsstation (70) mit unteren horizontalen ELUT (90) -Schienen (80, 81, 85) versehen ist, die geeignet sind, um darauf ein externes Aufstellwerkzeug (ELUT) (90) zu tragen,
und wobei der Turm (1) oberhalb der oberen Arbeitsstation (60) mit oberen horizontalen ELUT (90) -Schienen (80, 81, 85) versehen ist, die dazu geeignet sind, um darauf ein externes Aufstellwerkzeug (ELUT) (90) zu tragen,
- ein externes Aufstellwerkzeug (ELUT) (90), das selektiv auf jeder der unteren horizontalen ELUT (90) -Schienen (80, 81, 85) und der oberen horizontalen ELUT (90) -Schienen (80, 81, 85) montierbar ist.

## Revendications

1. Installation de pose en J de canalisation marine destinée à être utilisée sur un navire de pose de pipeline offshore sur un fond marin, l'installation comprenant :
- une tour (1),
- une pince à tête mobile (40),
- un dispositif de levage pour la pince à tête mobile, ledit dispositif de levage comprenant :
- un ou plusieurs treuils de levage (15),
- un ou plusieurs câbles de levage (16) entraînés par lesdits un ou plusieurs treuils,
- un moufle fixe (20) monté sur ladite tour,
- un moufle mobile (30) adapté pour être abaissé et levé le long de la tour entre un niveau supérieur et un niveau inférieur, ledit moufle mobile portant ladite pince à tête mobile, dans laquelle ledit moufle mobile est suspendu audit moufle fixe via lesdits un ou plusieurs câbles de levage,
- un dispositif d'accrochage (50), de préférence une pince d'accrochage, adapté pour supporter un pipeline préalablement lancé,
- un système chargeur de segment de tuyau (82, 87, 90, 100) adapté pour faire avancer un segment de tuyau dans une position dans une ligne de lancement (7) qui s'étend en alignement avec un pipeline préalablement lancé supporté par le dispositif d'accrochage,
dans laquelle, en fonctionnement, le dispositif d'accrochage (50) supporte un pipeline préalablement lancé (6) et le système chargeur de segment de tuyau (100) fait avancer un segment de tuyau dans ladite position dans ladite ligne de lancement (7), le moufle mobile (30) étant audit niveau supérieur, et dans laquelle une extrémité inférieure dudit segment de tuyau est reliée à une extrémité la plus haute dudit pipeline préalablement lancé supporté par le dispositif d'accrochage, et dans laquelle ladite pince à tête est en prise avec une extrémité haute dudit segment de tuyau, dans laquelle le poids du pipeline est transféré vers la pince à tête et le dispositif d'accrochage est détaché du pipeline, dans laquelle le dispositif de levage est actionné pour abaisser la pince à tête mobile et le pipeline suspendu à celui-ci de telle sorte que la pince à tête mobile atteint le niveau inférieur, suite à quoi le poids du pipeline est transféré au dispositif d'accrochage et la pince à tête est mise hors prise du pipeline,
**caractérisée en ce que**
l'installation est configurée pour fournir une trajectoire de levage latéralement décalée (17) pour au moins la pince à tête mobile (40), éventuellement également pour le moufle mobile (30), laquelle trajectoire de levage latéralement décalée est décalée latéralement de la ligne de lancement (7), l'installation comprenant un système de décalage latéral (21, 45, 46, 47) qui est adapté pour effectuer, avec le moufle mobile au niveau ou à proximité de son niveau inférieur, un déplacement latéral d'au moins la pince à tête mobile (40), éventuellement également du moufle mobile (30), et de préférence également du moufle fixe (20), par rapport à la tour (1) et à distance de la ligne de lancement (7) de sorte à dégager la ligne de lancement au point de permettre au système chargeur de segment de tuyau (82, 87, 90, 100) de faire avancer un segment de tuyau dans une position dans la ligne de lancement et de permettre de lever la pince à tête mobile, et éventuellement également le moufle mobile, le long de la trajectoire de levage décalée latéralement (17) en chevauchement dans le temps avec l'avancement du segment de tuyau dans ladite position dans la ligne de lancement et/ou liaison du segment de tuyau à ladite extrémité la plus élevée du pipeline préalablement lancé.

2. Installation selon la revendication 1, dans laquelle le moufle fixe (20) est déplaçable latéralement monté sur la tour et un dispositif de décalage latéral supérieur associé est prévu qui est adapté pour déplacer le moufle fixe par rapport à la tour entre un emplacement en alignement avec la ligne de lancement et un emplacement décalé en alignement avec une trajectoire de levage pour au moins la pince à tête mobile, éventuellement également le moufle mobile, laquelle trajectoire de levage est décalée latéralement par rapport à la ligne de lancement.

3. Installation selon la revendication 1 ou 2, dans laquelle la pince à tête mobile (30) et le moufle mobile (40) sont déplaçables latéralement par rapport à la tour entre un emplacement au niveau ou à proximité du niveau inférieur et en alignement avec la ligne de lancement et un emplacement en alignement avec la trajectoire de levage décalée latéralement , de préférence par un dispositif de décalage latéral inférieur associé prévu entre la tour et un ou les deux de la pince à tête mobile et du moufle mobile.

4. Installation selon l'une quelconque des revendications 1 à 3, dans laquelle la trajectoire de levage (17) est décalée latéralement de la ligne de lancement dans la direction dans laquelle le/les nouveau(x) segment(s) de tuyau est/sont avancée(s) dans la ligne de lancement par le système chargeur.

5. Installation selon l'une quelconque des revendications 1 à 4, dans laquelle la direction latérale de décalage de la trajectoire (17) par rapport à la ligne de lancement et à la tour correspond à une direction dans un plan parallèle à une face principale respective de la tour.

6. Procédé de pose en J d'un pipeline offshore (6) sur un fond marin dans lequel est utilisée une installation de pose en J en mer comprenant :
- une tour (1),
- une pince à tête mobile (40),
- un dispositif de levage pour la pince à tête mobile (40), ledit dispositif de levage comprenant :
- un ou plusieurs treuils de levage (15),
- un ou plusieurs câbles de levage (16) entraînés par lesdits un ou plusieurs treuils de levage (15),
- un moufle fixe (20) monté sur ladite tour (1),
- un moufle mobile (30) adapté pour être abaissé et levé le long de la tour (1) entre un niveau supérieur et un niveau inférieur, ledit moufle mobile (30) portant ladite pince à tête mobile (40), dans lequel ledit moufle mobile (30) est suspendu audit moufle fixe (20) via lesdits un ou plusieurs câbles de levage (16),
- un dispositif d'accrochage, de préférence une pince d'accrochage (50), adapté pour supporter un pipeline préalablement lancé (6),
- un système chargeur (105) de segment de tuyau (8, 9) adapté pour faire avancer un segment de tuyau (8, 9) dans une position dans une ligne de lancement (7) qui s'étend dans l'alignement avec un pipeline préalablement lancé (6) supporté par le dispositif d'accrochage, dans lequel le procédé comprend :
i) le support d'un pipeline préalablement lancé (6) au moyen du dispositif d'accrochage,
ii) l'avancement d'un segment de tuyau (8, 9) au moyen de la position de chargeur (105) de segment de tuyau (8, 9) dans ladite position dans ladite ligne de lancement (7), le moufle mobile (30) étant audit niveau supérieur,
iii) la liaison d'une extrémité inférieure dudit segment de tuyau (8, 9) à une extrémité la plus élevée dudit pipeline préalablement lancé (6) supporté par le dispositif d'accrochage,
iv) la mise en prise de la pince à tête (40) sur une extrémité haute dudit segment de tuyau (8, 9),
v) le transfert du poids du pipeline (6) vers la pince à tête (40) et le détachement du dispositif d'accrochage du pipeline (6),
vi) l'actionnement du dispositif de levage pour abaisser la pince à tête mobile (40) et le pipeline (6) suspendu à celle-ci de telle sorte que la pince à tête mobile (40) atteigne le niveau inférieur,
vii) le transfert du poids du pipeline (6) au dispositif d'accrochage et la mise hors prise de la pince à tête (40) du pipeline (6),
**caractérisé en ce que** l'installation est configurée pour fournir une trajectoire de levage décalée latéralement (17) pour la pince à tête mobile (40), éventuellement également pour le moufle mobile (30), qui est décalé latéralement par rapport à la ligne de lancement (7), l'installation comprenant un système de décalage latéral qui est adapté pour effectuer, avec le moufle mobile (30) au niveau ou à proximité de son niveau inférieur, un déplacement latéral d'au moins la pince à tête mobile (40), éventuellement également du moufle mobile (30), et de préférence également du moufle fixe (20), par rapport à la tour (1) et à distance de la ligne de lancement (7) de sorte à dégager la ligne de lancement (7) au point de permettre au système chargeur (105) de segment de tuyau (8, 9) de faire avancer un segment de tuyau (8, 9) dans une position dans la ligne de lancement (7), et dans lequel le procédé comprend en outre :
viii) après que la pince à tête (40) a été mise hors prise du pipeline (6), l'actionnement du système de décalage latéral pour effectuer, avec le moufle mobile (30) sur ou à proximité de son niveau inférieur, un déplacement latéral d'au moins la pince à tête mobile (40), éventuellement également du moufle mobile (30), de préférence également du moufle fixe (20), à distance de la ligne de lancement (7) de sorte à déplacer au moins la pince à tête mobile (40) vers la trajectoire de levage décalée latéralement (17),
ix) le levage du moufle mobile (30) et de la pince à tête mobile (40) portés ainsi le long de la trajectoire de levage décalée latéralement (17) en chevauchement dans le temps avec l'avancement du segment de tuyau (8, 9) dans ladite position dans la ligne de lancement (7) et/ou la liaison du segment de tuyau (8, 9) à ladite extrémité la plus élevée du pipeline préalablement lancé (6).

7. Installation de pose en J de canalisation marine destinée à être utilisée sur un navire de pose de pipeline offshore (6) sur un fond marin, l'installation comprenant :
- une tour (1),
- une pince à tête mobile (40),
- un dispositif de levage pour la pince à tête mobile (40), ledit dispositif de levage comprenant :
- un ou plusieurs treuils de levage (15),
- un ou plusieurs câbles de levage (16) entraînés par lesdits un ou plusieurs treuils (15),
- un moufle fixe (20) monté sur ladite tour (1),
- un moufle mobile (30) adapté pour être abaissé et levé le long de la tour (1) entre un niveau supérieur et un niveau inférieur, ledit moufle mobile (30) portant ladite pince à tête mobile (40), dans laquelle ledit moufle mobile (30) est suspendu au moufle fixe (20) via lesdits un ou plusieurs câbles de levage (16),
- un dispositif d'accrochage (50), de préférence une pince d'accrochage (50), adapté pour supporter un pipeline préalablement lancé (6),
- un système chargeur (105) de segment de tuyau (8, 9) adapté pour faire avancer un segment de tuyau (8, 9) dans une position dans une ligne de lancement (7) qui s'étend dans l'alignement avec un pipeline préalablement lancé (6) supporté par le dispositif d'accrochage,
dans laquelle, en fonctionnement, le dispositif d'accrochage supporte un pipeline préalablement lancé (6) et le système chargeur (105) de segment de tuyau (8, 9) fait avancer un segment de tuyau (8, 9) dans ladite position dans ladite ligne de lancement (7), le moufle mobile (30) étant audit niveau supérieur, et dans laquelle une extrémité inférieure dudit segment de tuyau (8, 9) est reliée à une extrémité la plus élevée dudit pipeline préalablement lancé (6) supporté par le dispositif d'accrochage, et dans laquelle ladite pince à tête (40) est mise en prise sur une extrémité haute dudit segment de tuyau (8, 9), dans laquelle le poids du pipeline (6) est transféré vers la pince à tête (40) et le dispositif d'accrochage est détaché du pipeline (6), dans laquelle le dispositif de levage est actionné pour abaisser la pince à tête mobile (40) et le pipeline (6) suspendu à celle-ci de telle sorte que la pince à tête mobile (40) atteigne le niveau inférieur, suite à quoi le poids du pipeline (6) est transféré vers le dispositif d'accrochage et la pince à tête (40) est mise hors prise du pipeline (6),
**caractérisée en ce que**
le moufle fixe (20) est déplaçable latéralement monté sur la tour (1) et un dispositif de décalage latéral supérieur associé est prévu qui est adapté pour déplacer le moufle fixe (20) par rapport à la tour (1) entre un emplacement en alignement avec la ligne de lancement (7) et un emplacement décalé en alignement avec une trajectoire de levage (17) pour au moins la pince à tête mobile (40), éventuellement également le moufle mobile (30), laquelle trajectoire de levage (17) est décalée latéralement par rapport à la ligne de lancement (7),
dans laquelle en outre la pince à tête mobile (40) et le moufle mobile (30) sont déplaçables latéralement par rapport à la tour (1) entre un emplacement au niveau ou à proximité du niveau inférieur et en alignement avec la ligne de lancement (7) et un emplacement en alignement avec la trajectoire de levage décalée latéralement (17) , de préférence par un dispositif de décalage latéral inférieur associé prévu entre la tour (1) et un ou les deux de la pince à tête mobile (40) et du moufle mobile (30),
permettant ainsi, avec le moufle mobile (30) au niveau ou à proximité du niveau inférieur, de dégager la ligne de lancement (7) à un point qui permet au système chargeur (105) de segment de tuyau (8, 9) de faire avancer un segment de tuyau (8, 9) dans une position dans la ligne de lancement (7) et qui permet de lever la pince à tête mobile (40) et le moufle mobile (30) le long de la trajectoire de levage décalée latéralement (17) en chevauchement dans le temps avec l'avancement du segment de tuyau (8, 9) dans ladite position dans la ligne de lancement (7) et/ou la liaison à ladite extrémité la plus élevée du pipeline préalablement lancé (6).

8. Installation de pose en J de canalisation marine comprenant :
- une tour (1),
- une pince à tête mobile (40),
- un dispositif de levage pour la pince à tête mobile (40), ledit dispositif de levage comprenant :
- un ou plusieurs treuils de levage (15),
- un ou plusieurs câbles de levage (16) entraînés par lesdits un ou plusieurs treuils (15),
- un moufle fixe (20) monté sur ladite tour (1),
- un moufle mobile (30) adapté pour être abaissé et levé le long de la tour (1) sur une course verticale complète entre un niveau le plus élevé et un niveau le plus bas, ledit moufle mobile (30) portant ladite pince à tête mobile (40), dans laquelle ledit moufle mobile (30) est suspendu audit moufle fixe (20) via lesdits un ou plusieurs câbles de levage (16),
- un dispositif d'accrochage, de préférence une pince d'accrochage (50), adapté pour supporter un pipeline préalablement lancé (6), ledit dispositif d'accrochage étant agencé au niveau ou à proximité du niveau inférieur, dans laquelle l'installation est pourvue d'un poste de travail supérieur (60) qui est monté sur la tour (1) à mi-chemin entre le niveau le plus élevé et le niveau le plus bas, ledit poste de travail supérieur (60) étant monté de façon mobile sur la tour (1) entre une position fonctionnelle et une position rétractée, dans laquelle l'installation est pourvue d'un poste de travail inférieur (70) qui est agencé à proximité du niveau le plus bas, par exemple sur une coque du navire ou sur une partie inférieure de la tour (1),
- un système chargeur (105) de segment de tuyau (8, 9) adapté pour faire avancer deux segments de tuyau (8) dans une position dans une ligne de lancement (7) qui s'étend en alignement avec un pipeline préalablement lancé (6) supporté par le dispositif d'accrochage, un segment de tuyau inférieur (8) des deux étant positionné entre le poste de travail inférieur (70) et le poste de travail supérieur (60) et un segment de tuyau supérieur (9) des deux étant positionné entre la pince à tête (40) dans son niveau le plus élevé et le poste de travail supérieur (60),
dans laquelle le poste de travail supérieur (60) est pourvu d'une paroi latérale, d'un plancher et d'un toit, et pourvu d'une ouverture d'accès latérale (64, 74) qui s'étend sur la hauteur du poste de travail supérieur (60) pour permettre une introduction latérale d'une partie supérieure du segment de tuyau inférieur (8) et d'une partie inférieure du segment de tuyau supérieur (9) dans le poste de travail supérieur (60) et dans la ligne de lancement (7), par exemple ledit segment de tuyau inférieur et supérieur (9) ayant été raccordés l'un à l'autre avant d'être introduits latéralement dans le poste de travail supérieur (60), par exemple le poste de travail supérieur (60) étant configuré pour l'inspection et/ou le revêtement dudit raccord dans le poste de travail supérieur (60).

9. Installation de pose en J de canalisation marine destinée à être utilisée sur un navire de pose de pipeline offshore (6) sur un fond marin, l'installation comprenant :
- une tour (1),
- une pince à tête mobile (40),
- un dispositif de levage pour la pince à tête mobile (40), ledit dispositif de levage comprenant :
- un ou plusieurs treuils de levage (15),
- un ou plusieurs câbles de levage (16) entraînés par lesdits un ou plusieurs treuils (15),
- un moufle fixe (20) monté sur ladite tour (1),
- un moufle mobile (30) adapté pour être abaissé et levé le long de la tour (1) sur une course verticale complète entre un niveau le plus élevé et un niveau le plus bas, ledit moufle mobile (30) portant ladite pince à tête mobile (40), dans laquelle ledit moufle mobile (30) est suspendu au moufle fixe (20) via lesdits un ou plusieurs câbles de levage (16),
- un dispositif d'accrochage (50), de préférence une pince d'accrochage, adapté pour supporter un pipeline préalablement lancé (6), ledit dispositif d'accrochage étant agencé au niveau ou à proximité du niveau inférieur,
- un système chargeur (105) de segment de tuyau (8, 9) adapté pour faire avancer un segment de tuyau (8, 9) dans une position dans une ligne de lancement (7) qui s'étend en l'alignement avec un pipeline préalablement lancé (6) supporté par le dispositif d'accrochage, dans laquelle l'installation est pourvue d'un poste de travail supérieur (60) qui est monté sur la tour (1) à mi-chemin entre le niveau le plus élevé et le niveau le plus bas, ledit poste de travail supérieur (60) étant monté de façon mobile sur la tour (1) entre une position fonctionnelle et une position rétractée, dans laquelle l'installation est pourvue d'un poste de travail inférieur (70) qui est agencé à proximité du niveau le plus bas, par exemple sur une coque du navire ou sur une partie inférieure de la tour (1),
dans laquelle la tour (1) est pourvue, au-dessus du poste de travail inférieur (70) de rails (80, 81, 85) d'ELUT (90) horizontaux inférieurs adaptés pour supporter sur ceux-ci un outil d'alignement externe (ELUT) (90),
et dans laquelle la tour (1) est pourvue, au-dessus du poste de travail supérieur (60), de rails (80, 81, 85) d'ELUT (90) horizontaux supérieurs adaptés pour supporter sur ceux-ci un outil d'alignement externe (ELUT) (90),
- un outil d'alignement externe (ELUT) (90) qui peut être monté sélectivement sur chacun des rails (80, 81, 85) d'ELUT (90) horizontaux inférieurs et des rails (80, 81, 85) d'ELUT (90) horizontaux supérieurs.
